# EUROPÄISCHE PATENTSCHRIFT

(11) **EP 1 580 430 B1**
(45) Veröffentlichungstag und Bekanntmachung des Hinweises auf die Patenterteilung: **03.06.2009**
(21) Anmeldenummer: 05100674.0
(22) Anmeldetag: 01.02.2005
(51) Int. Cl.: F04B 49/035, G05D 7/01

(54) **Volumenstrombegrenzer**
Volume flow rate limiter
Limiteur de débit volumique

(30) Priorität: 24.03.2004 DE 102004014434
(43) Veröffentlichungstag der Anmeldung: 28.09.2005
(73) Patentinhaber: Continental Automotive GmbH, 30165 Hannover (DE)
(72) Erfinder: Geissel, Eberhard, 36093, Künzell (DE)

(56) Entgegenhaltungen:
- DE-U1- 9 301 796
- GB-A- 908 891
- US-A- 2 017 311
- US-A- 3 384 020
- US-A- 4 570 667

## Beschreibung

Die Erfindung bezieht sich auf einen Volumenstrombegrenzer mit einer Steuerkammer, in der ein Steuerkolben verschiebbar angeordnet ist, der die Steuerkammer in eine Reglerkammer und eine Gegendruckkammer unterteilt, mit einer in die Reglerkammer mündenden Zuflussleitung, über die von einer Pumpe Flüssigkeit, insbesondere Kraftstoff, der Reglerkammer zugeführt wird, mit einem von der Reglerkammer zu einem Verbraucher führenden Auslass und einem von der Reglerkammer ausgehenden Rücklauf, der von dem in der Reglerkammer verschiebbar angeordneten Steuerkolben absperrbar ist, wobei der Steuerkolben von der Flüssigkeit entgegen der Kraft einer Reglerfeder in Öffnungsrichtung des Rücklaufes beaufschlagt, wobei in dem Auslass ein Venturirohr angeordnet ist, in dessen verengten Bereich eine Druckrückführleitung mündet, die zu der Gegendruckkammer führt und wobei der Bewegungsweg des Steuerkolbens in Schließrichtung des Rücklaufes durch einen Anschlag begrenzt ist.

Pumpen, insbesondere Kraftstoffpumpen, zeigen in der Regel in ihrer Fördercharakteristik eine Druck-Volumenstrom-Abhängigkeit. Dies bedeutet, dass bei sinkendem Gegendruck an dem Auslass der Förderstrom ansteigt.

Bei Volumenstrombegrenzern der eingangs genannten Art ist es bekannt, dass der Steuerkolben von dem Druck des Druckmittels gegen die Kraft der Feder verschoben und so der Rücklauf mehr oder weniger geöffnet wird, damit ein Teil des Flüssigkeitsstroms abgeregelt wird. Diese Funktion ist abhängig von dem absoluten Druck in dem System und damit auch von dem von dem Verbraucher rückwirkenden Druck. Ist dieser Druck schwankend, so ist keine konstante Volumenstrombegrenzung möglich.

Aus der US 33 84 020 ist ein Volumenstrombegrenzer der eingangs genannten Art bekannt. Dabei mündet der Auslass radial in die Reglerkammer und ist nicht verschließbar.

Aus der US 45 70 667 ist ein Durchflussregler mit einem in einer Steuerkammer verschiebbar angeordneten Steuerkolben bekannt, der die Steuerkammer in eine Reglerkammer und eine Gegendruckkammer unterteilt. In die Reglerkammer fördert eine Pumpe eine Flüssigkeit, die über eine Düse mit Diffusor zu einem Verbraucher strömt. Durch den Druck in der Reglerkammer ist der Steuerkolben entgegen der Kraft einer Feder und gegen den in der Gegendruckkammer herrschenden Druck in eine die Reglerkammer mit einem Rücklauf verbindende Abregelstellung bewegbar beaufschlagbar. Von dem in Strömungsrichtung hinter der Düse angeordneten Diffusor führt eine Verbindung zur Gegendruckkammer

Aufgabe der Erfindung ist es daher einen Volumenstrombegrenzer der eingangs genannten Art zu schaffen, der eine Volumenstrombegrenzung unabhängig von dem Druckniveau in dem hydraulischen System ermöglicht.

Diese Aufgabe wird erfindungsgemäß dadurch gelöst, dass der Auslass in Bewegungsrichtung des Steuerkolbens in die Reglerkammer mündet und der Anschlag ein in die Reglerkammer ragender Rohrstutzen des Auslasses ist, auf dessen Mündung der Steuerkolben diese verschließend anlegbar ist.

Durch diese Ausbildung durchströmt der geförderte Volumenstrom das Venturirohr. Dabei erhöht sich die Strömungsgeschwindigkeit an der verengten Stelle des Venturirohres, wodurch dort ein Druckabfall eintritt. Bei unterschiedlicher Strömungsgeschwindigkeit durch das Venturirohr verändert sich der Druck an der verengten Stelle und zwar sinkt dieser Druck mit zunehmender Strömungsgeschwindigkeit ab.

Da der Bereich der verengten Stelle über die Druckrückführleitung mit der Gegendruckkammer verbunden ist, wird bei sich erhöhender Strömungsgeschwindigkeit aufgrund von sich reduzierendem Gegendruck vom Verbraucher her der Druck an der verengten Stelle des Venturirohres reduziert. Dieser reduzierte Druck wirkt auch auf die der Gegendruckkammer zugewandte Seite des Steuerkolbens, während auf dessen der Reglerkammer zugewandten Seite ein hoher Druck wirkt. Damit verschiebt dieser höhere Druck den Steuerkolben in Öffnungsrichtung des Rücklaufs und öffnet diesen, so dass über diesen Rücklauf zumindest ein Teil des von der Pumpe geförderten Volumenstroms z.B. zu einem Behälter abgeführt wird.

Das Maß der Öffnung des Rücklaufs bestimmt sich aus dem Druckunterschied zwischen Gegendruckkammer und Reglerkammer sowie der Kraft der Feder.

Bei steigendem Pumpenförderstrom verschiebt sich der Steuerkolben entgegen der Kraft der Feder in die Gegendruckkammer und gibt den Rücklauf frei, durch den ein Teil des Pumpenförderstroms z.B. zu dem Behälter zurückfließt. Sobald der Rückfluss geöffnet ist, steigt bei zunehmendem Pumpenförderstrom der Volumenstrom im Auslass im wesentlichen nicht weiter an. Da diese Funktion nicht vom Förderdruck der Pumpe abhängig ist, kann die Volumenstrombegrenzung bei unterschiedlichen Förderdrücken eingesetzt werden.

Der durch den Rohrstutzen gebildete Anschlag dient zum einen zur Definition der nicht ausgelenkten Stellung des Steuerkolbens, in der der Rücklauf geschlossen ist und führt zum anderen zu einem Verschließen des Rohrstutzens bei nicht vorhandenem Förderdruck der Pumpe.

Zu einem einfachen Aufbau führt es, wenn die Zuflussleitung und/oder der Rücklauf in einem Abstand voneinander etwa rechtwinklig zur Bewegungsrichtung des Steuerkolbens in die Reglerkammer münden.

Um den Steuerkolben ohne Einhaltung einer bestimmten Einbaulage in die Steuerkammer einbauen zu können, kann die Steuerkammer und der Steuerkolben einen Kreisquerschnitt besitzen.

Die der Gegendruckkammer zugewandte Stirnseite des Steuerkolbens ist vorzugsweise von der als Druckfeder ausgebildeten Reglerfeder beaufschlagt.

Der Auslaß kann zu einem Gemischaufbereitungssystem einer Brennkraftmaschine führen.

Die wirksam beaufschlagbaren Flächen des Steuerkolbens können auf dessen der Gegendruckkammer und auf dessen der Reglerkammer zugewandten Seite gleich groß sein.

Es ist aber auch möglich, daß die wirksam beaufschlagbaren Flächen des Steuerkolbens auf dessen der Gegendruckkammer und auf dessen der Reglerkammer zugewandten Seite unterschiedlich groß sind.

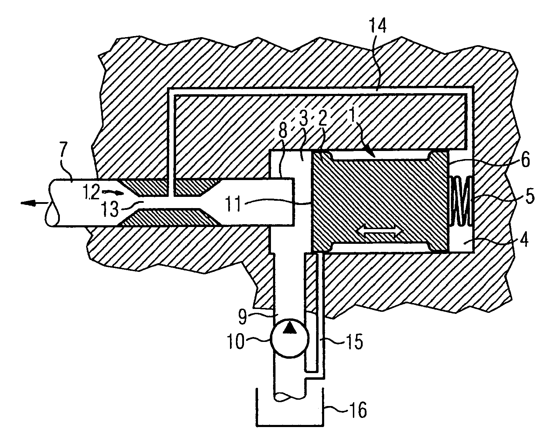

Ein Ausführungsbeispiel der Erfindung ist in der Zeichnung dargestellt und wird im folgenden näher beschrieben. Die einzige Figur der Zeichnung zeigt eine Prinzipdarstellung eines Volumenstrombegrenzers im Schnitt.

Der dargestellte Volumenstrombegrenzer besitzt eine stirnseitig geschlossene zylindrische Steuerkammer 1, auf der ein Steuerkolben gleichen Querschnitts verschiebbar geführt angeordnet ist. Der Steuerkolben 2 trennt die Steuerkammer 1 in eine Reglerkammer 3 und eine Gegendruckkammer 4.

Eine an der Stirnseite der Gegendruckkammer 4 abgestützte Druckfeder 5 beaufschlagt den Steuerkolben 2 an seiner der Gegendruckkammer 4 zugewandten Stirnfläche 6.

Koaxial mündet ein Auslaß 7 in die Reglerkammer 3, wobei ein Rohrstutzen 8 des Auslasses 7 in die Reglerkammer 3 ragt.

Radial mündet eine Zuflußleitung 9 in die Reglerkammer 3. Über die Zuflußleitung 9 wird von einer Kraftstoffpumpe 10 Kraftstoff in die Reglerkammer 3 gefördert. Da zunächst der Steuerkolben 2 mit seiner der Reglerkammer 3 zugewandten Stirnfläche 11 auf der Mündung des Rohrstutzens 8 in Anlage ist und diese Mündung verschließt, wird nur eine äußere Ringfläche der Stirnfläche 11 von dem Förderdruck der Kraftstoffpumpe 10 beaufschlagt. Dieser reicht aber aus um den Steuerkolben 2 von der Mündung des Rohrstutzens 8 abzuheben und den Auslaß 7 zu öffnen.

In dem Auslaß 7 ist ein Venturirohr 12 angeordnet, das von dem Kraftstoff auf dem Weg zu einem nicht dargestellten Gemischaufbereitungssystem einer Brennkraftmaschine durchströmt wird. In dem verengten Bereich 13 des Venturirohres 12 mündet eine Druckrückführleitung 14, die zu der Gegendruckkammer 4 führt, so daß die Stirnfläche 6 von einem Druck entgegen der Öffnungsrichtung des Steuerkolbens 2 beaufschlagt wird. Dieser über die Druckrückführleitung 14 zur Gegendruckkammer 4 geleitete Druck ist nur abhängig von der Strömungsgeschwindigkeit im Venturirohr 12, nicht aber von dem Druck im Auslaß 7. Je höher die Strömungsgeschwindigkeit im Venturirohr 12 ist, um so geringer wird der Druck, der zur Gegendruckkammer 4 geleitet wird und den Steuerkolben 2 in Schließrichtung beaufschlagt.

Erreicht die Strömungsgeschwindigkeit im Venturirohr 12 eine bestimmte Größe, ist der Druck in der Gegendruckkammer 4 so gering, daß der Steuerkolben 2 durch den die Stirnfläche 11 beaufschlagenden Druck entgegen der Kraft der Druckfeder 5 so weit in Öffnungsrichtung verschoben wird, daß er die Mündung eines in einem Abstand zur Zuflußleitung 9 radial in die Reglerkammer 3 mündenden Rücklaufes 15 frei gibt, so daß ein Teil der von der Kraftstoffpumpe 10 geförderten Kraftstoffs über den Rücklauf 15 wieder zu einem Behälter 16 abgeleitet wird, aus dem die Kraftstoffpumpe 10 Kraftstoff ansaugt.

Bei dieser Art der Abregelung verschiebt sich bei zunehmendem von der Kraftstoffpumpe 10 gefördertem Kraftstoff der Steuerkolben 2 weiter in Öffnungsrichtung und regelt den um die Zunahme erhöhten Volumenstrom der Kraftstoffpumpe 10 derart ab, daß der aus dem Auslaß 7 heraustretende Förderstrom etwa konstant bleibt.

Damit erfolgt eine Begrenzung der dem Gemischaufbereitungssystem zugeführten Kraftstoffmenge. Eine Rückwirkung des jeweils über den Auslaß 7 an dem Gemischaufbereitungssystem anliegenden Drucks auf die Volumenstrombegrenzung ist damit vermieden.

## Patentansprüche

1. Volumenstrombegrenzer mit einer Steuerkammer (1), in der ein Steuerkolben (2) verschiebbar angeordnet ist, der die Steuerkammer (1) in eine Reglerkammer (3) und eine Gegendruckkammer (4) unterteilt, mit einer in die Reglerkammer (3) mündenden Zuflussleitung (9), über die von einer Pumpe (10) Flüssigkeit, insbesondere Kraftstoff, der Reglerkammer (3) zugeführt wird, mit einem von der Reglerkammer (3) zu einem Verbraucher führenden Auslass (7) und einem von der Reglerkammer (3) ausgehenden Rücklauf (15), der von dem in der Reglerkammer (3) verschiebbar angeordneten Steuerkolben (2) absperrbar ist, wobei der Steuerkolben (2) von der Flüssigkeit entgegen der Kraft einer Reglerfeder (5) in Öffnungsrichtung des Rücklaufes (15) beaufschlagt, wobei in dem Auslass (7) ein Venturirohr (12) angeordnet ist, in dessen verengten Bereich (13) eine Druckrückführleitung (14) mündet, die zu der Gegendruckkammer (4) führt und wobei der Bewegungsweg des Steuerkolbens (2) in Schließrichtung des Rücklaufes (15) durch einen Anschlag begrenzt ist, **dadurch gekennzeichnet, dass** der Auslass (7) in Bewegungsrichtung des Steuerkolbens (2) in die Reglerkammer (3) mündet und der Anschlag ein in die Reglerkammer (3) ragender Rohrstutzen (8) des Auslasses (7) ist, auf dessen Mündung der Steuerkolben (2) diese verschließend anlegbar ist.

2. Volumenstrombegrenzer nach einem der vorhergehenden Ansprüche, **dadurch gekennzeichnet, dass** die Zuflussleitung (9) und/oder der Rücklauf (15) in einem Abstand voneinander etwa rechtwinklig zur Bewegungsrichtung des Steuerkolbens (2) in die Reglerkammer (3) münden.

3. Volumenstrombegrenzer nach einem der vorhergehenden Ansprüche, **dadurch gekennzeichnet, dass** die Steuerkammer (1) und der Steuerkolben (2) einen Kreisquerschnitt besitzen.

4. Volumenstrombegrenzer nach einem der vorhergehenden Ansprüche, **dadurch gekennzeichnet, dass** die der Gegendruckkammer (4) zugewandte Stirnseite (6) des Steuerkolbens (2) von der als Druckfeder (5) ausgebildeten Reglerfeder kraftbeaufschlagt ist.

5. Volumenstrombegrenzer nach einem der vorhergehenden Ansprüche, **dadurch gekennzeichnet, dass** der Auslass (7) zu einem Gemischaufbereitungssystem einer Brennkraftmaschine führt.

6. Volumenstrombegrenzer nach einem der vorhergehenden Ansprüche, **dadurch gekennzeichnet, dass** die wirksam beaufschlagbaren Flächen (6, 11) des Steuerkolbens (2) auf dessen der Gegendruckkammer (4) und auf dessen der Reglerkammer (3) zugewandten Seite gleichgroß sind.

7. Volumenstrombegrenzer nach einem der Ansprüche 1 bis 5, **dadurch gekennzeichnet, dass** die wirksam beaufschlagbaren Flächen des Steuerkolbens auf dessen der Gegendruckkammer und auf dessen der Reglerkammer zugewandten Seite unterschiedlich groß sind.

## Claims

1. Volume flow rate limiter, with a control chamber (1) in which is arranged displaceably a control piston (2) which subdivides the control chamber (1) into a regulator chamber (3) and a counterpressure chamber (4), with an inflow line (9) which issues into the regulator chamber (3) and via which liquid, particularly fuel, is supplied to the regulator chamber (3) by a pump (10), with an outlet (7) leading from the regulator chamber (3) to a consumer and with a return (15) which emanates from the regulator chamber (3) and can be shut off by the control piston (2) arranged displaceably in the regulator chamber (3), the control piston (2) being acted upon by the liquid, counter to the force of a regulator spring (5), in the opening direction of the return (15), there being arranged in the outlet (7) a Venturi tube (12), into the narrowed region (13) of which issues a pressure recirculation line (14) which leads to the counterpressure chamber (4), and the path of movement of the control piston (2) being limited in the closure direction of the return (15) by a stop, **characterized in that** the outlet (7) issues in the direction of movement of the control piston (2) into the regulator chamber (3), and the stop is a tubular connection piece (8) of the outlet (7), the said tubular connection piece projecting into the regulator chamber (3), and the control piston (2) being capable of being brought to bear against the mouth of the said outlet so as to close the said regulator chamber.

2. Volume flow rate limiter according to one of the preceding claims, **characterized in that** the inflow line (9) and/or the return (15) issue into the regulator chamber (3) at a distance from one another approximately at right angles to the direction of movement of the control piston (2).

3. Volume flow rate limiter according to one of the preceding claims, **characterized in that** the control chamber (1) and the control piston (2) possess a circular cross section.

4. Volume flow rate limiter according to one of the preceding claims, **characterized in that** that end side (6) of the control piston (2) which faces the counterpressure chamber (4) is acted upon with force by the regulator spring designed as a compression spring (5).

5. Volume flow rate limiter according to one of the preceding claims, **characterized in that** the outlet (7) leads to a mixture preparation system of an internal combustion engine.

6. Volume flow rate limiter according to one of the preceding claims, **characterized in that** those surfaces (6, 11) of the control piston (2) which can effectively be acted upon are of the same size on its side facing the counterpressure chamber (4) and on its side facing the regulator chamber (3).

7. Volume flow rate limiter according to one of Claims 1 to 5, **characterized in that** those surfaces of the control piston which can effectively be acted upon are of different size on its side facing the counterpressure chamber and on its side facing the regulator chamber.

## Revendications

1. Limiteur de débit volumique comportant une chambre de commande (1), dans laquelle est monté en translation un piston de commande (2), lequel piston partage la chambre de commande (1) en une chambre de régulation (3) et une chambre de contre-pression (4), une conduite d'alimentation (9), qui débouche dans la chambre de régulation (3) et par l'intermédiaire de laquelle un liquide, notamment du carburant, est transféré par une pompe (10) dans la chambre de régulation (3), une sortie (7), qui conduit de la chambre de régulation (3) vers un consommateur, et une conduite de reflux (15), qui part de la chambre de régulation (3) et qui peut être obturée par le piston de commande (2) monté en translation dans la chambre de régulation (3), où le piston de commande (2) est soumis par le liquide, dans la direction de l'ouverture de la conduite de reflux (15), à une force opposée à la force d'un ressort de régulation (5), où un tube de Venturi (12), dans la partie étroite (13) duquel débouche une conduite de refoulement (14), laquelle conduit à la chambre de contre-pression (4), est monté dans la sortie (7) et où la course du piston de commande (2) dans la direction de fermeture de la conduite de reflux (15) est limitée par une butée, **caractérisé par le fait que** la sortie (7) dans la direction de déplacement du piston de commande (2) débouche dans la chambre de régulation (3) et que la butée est une tubulure (8) de la sortie (7), qui fait saillie dans la chambre de régulation (3) et sur l'embranchement de laquelle le piston de commande (2) peut s'appliquer en la fermant.

2. Limiteur de débit volumique selon l'une des revendications précédentes, **caractérisé par le fait que** la conduite d'alimentation (9) et / ou la conduite de reflux (15) débouchent dans la chambre de régulation (3) à une certaine distance l'une de l'autre et à peu près perpendiculairement à la direction de déplacement du piston de commande (2).

3. Limiteur de débit volumique selon l'une des revendications précédentes, **caractérisé par le fait que** la chambre de commande (1) et le piston de commande (2) ont une section transversale circulaire.

4. Limiteur de débit volumique selon l'une des revendications précédentes, **caractérisé par le fait que** la face frontale (6) du piston de commande (2) tournée vers la chambre de contre-pression (4) est soumise à une force de contrainte par le ressort de régulation conçu en tant que ressort de pression (5).

5. Limiteur de débit volumique selon l'une des revendications précédentes, **caractérisé par le fait que** la sortie (7) conduit à un système de mélange air-carburant d'un moteur à combustion interne.

6. Limiteur de débit volumique selon l'une des revendications précédentes, **caractérisé par le fait que** les surfaces (6, 11) du piston de commande (2) soumises à une force active sur son côté tourné vers la chambre de contre-pression (4) et sur son côté tourné vers la chambre de régulation (3) ont la même grandeur.

7. Limiteur de débit volumique selon l'une des revendications 1 à 5, **caractérisé par le fait que** les surfaces du piston de commande soumises à une force active sur son côté tourné vers la chambre de contre-pression et sur son côté tourné vers la chambre de régulation ont une grandeur différente.
